# EUROPÄISCHE PATENTSCHRIFT

(11) **EP 0 265 599 B1**
(45) Veröffentlichungstag und Bekanntmachung des Hinweises auf die Patenterteilung: **07.04.1993**
(21) Anmeldenummer: 87110577.1
(22) Anmeldetag: 22.07.1987
(51) Int. Cl.: B29C 51/16

(54) **Tiefziehmaschine zum Herstellen von Behältern aus thermoplastischer Folie mit einer eine Schneideinrichtung aufweisenden Banderolievorrichtung**
Deep-drawing machine for the production of containers from a thermoplastic sheet, comprising a sealing strip apparatus presenting a cutting device
Machine pour la fabrication par étirage de récipients d'une feuille thermoplastique avec un dispositif de banderolage pourvu d'un coupeur

(30) Priorität: 29.10.1986 DE 3636767
(43) Veröffentlichungstag der Anmeldung: 04.05.1988
(73) Patentinhaber: Benz & Hilgers GmbH, 40470 Düsseldorf (DE)
(72) Erfinder: Turtschan, Alfons, D-7170 Schwäbisch-Hall (DE)
(74) Vertreter: Pfeiffer, Helmut, Dipl.-Ing.

(56) Entgegenhaltungen:
- DE-A- 2 825 092
- DE-A- 2 850 843
- FR-A- 2 141 109
- FR-A- 2 256 013
- GB-A- 1 357 531
- US-A- 3 709 643
- US-A- 4 144 010

## Beschreibung

Die Erfindung bezieht sich auf eine Tiefziehmaschine zum Herstellen von Behältern aus thermoplastischer Folie mit einer eine Schneideinrichtung aufweisenden Banderoliervorrichtung zum Formen von Banderolen oder Etiketten aus Banderolenstreifen und einer Aufgabevorrichtung zur Aufgabe der Banderolen oder Etiketten an eine Übergabevorrichtung, von der die Banderolen oder Etiketten an bewegbare Hohlformen einer Formvorrichtung übergeben werden.

Eine Tiefziehmaschine der eingangs genannten Art ist durch die deutsche Offenlegungsschrift 28 25 092 bekanntgeworden. Bei dieser Tiefziehmaschine muß sowohl eine Aufnahmeplatte für die Banderolen als auch die eigentliche Tiefziehform selbst seitlich verschoben werden. Eine derart ausgebildete Übergabevorrichtung für die Banderolen ist nicht nur recht aufwendig, sondern bei mehr als zwei Bahnreihen nicht mehr vertretbar, da in einem solchen Fall die Tiefziehformen so schwer werden, daß eine exakte und feinfühlige seitliche Verschiebung nicht mehr möglich bzw. nur noch mit besonderem Aufwand möglich ist. Außerdem muß bei einer solchen seitlichen Verschiebung der Tiefziehform in jedem Fall eine aufwendige nachführende Verbindung der Tiefziehform mit einer vorhandenen Vakuumeinrichtung, die zur Herstellung der thermoplastisch geformten Behälter notwendig ist, vorhanden sein, wodurch sich der Bauaufwand noch weiter erhöht.

Der Erfindung liegt die Aufgabe zugrunde, eine Tiefziehmaschine der eingangs genannten Art zu schaffen, durch die sich bei geringem Bauaufwand gleichzeitig eine vergleichsweise große Anzahl von Banderolen, Etiketten oder dgl. schnell und sicher in die Hohlformen der Formvorrichtung einbringen lassen und die ferner eine gute Zugänglichkeit zu der Banderoliervorrichtung einerseits und der Formvorrichtung andererseits gewährleistet.

Diese Aufgabe wird erfindungsgemäß dadurch gelöst, daß die Hohlformen relativ senkrecht zur Folienebene beweglich gelagert sind und die Übergabevorrichtung einen zwischen der Banderoliervorrichtung und der dazu mit Abstand angeordneten Formvorrichtung angeordneten, um eine im wesentlichen parallel zur Längsachse der Hohlformen drehbaren Drehteller aufweist. Bei einer derart ausgebildeten Tiefziehmaschine brauchen die Banderoliervorrichtung und die Formvorrichtung bezüglich der Übergabe der Banderolen oder Etiketten nicht seitlich verschoben zu werden, so daß eine Beeinträchtigung des Ablaufs der Banderolenstreifen von den Beschickungsvorrichtungen zu der Banderoliervorrichtung nicht zu befürchten ist und ferner mit der Formvorrichtung zusammenwirkende Einrichtungen, wie z. B. ein Unterdruckmechanismus und dessen Verbindungsleitungen fest mit der Formvorrichtung bzw. Formen verbunden sein können. Der gesamte Bewegungsablauf bezüglich der Übergabe der Banderolen oder Etiketten ist alleine auf den Drehteller abgestellt, der durch seine Anordnung zwischen der Banderoliervorrichtung einerseits und der Formvorrichtung andererseits auf der einen Seite eine mehrfache Beschickung mit Banderolen und andererseits eine mehrfache Übergabe der Banderolen an die Formen der Formvorrichtung ermöglicht. Dabei ist zwischen der Banderoliervorrichtung und der Bewegungsbahn der Folienbahn genügend Platz vorhanden, so daß etwaige Zusatzeinrichtungen, wie etwa eine Ausrichteeinrichtung für die Banderolen oder Etiketten plaziert werden können. Ferner sind die Formvorrichtung und die Banderoliervorrichtung leicht zugänglich, so daß etwa auftretende Störungen in der einen oder anderen Vorrichtung schnell und leicht behoben werden können.

Der im wesentlichen parallel zur Längsachse der Hohlformen drehbare Drehteller gibt die Möglichkeit, daß der Drehteller zur Einnahme von Raststellungen, nämlich einer die Banderolen oder Etiketten von einer Aufgabevorrichtung der Banderoliervorrichtung übernehmenden ersten Raststellung, die Banderolen in der Höhe ausrichtenden zweiten Raststellung, einer die Banderolen an die Hohlformen der Formvorrichtung abgebenden dritten Raststellung und einer zwischen der Formvorrichtung und der Aufgabevorrichtung liegenden vierten Raststellung synchron im Arbeitstakt der Aufgabevorrichtung und der Formvorrichtung durch ein Schrittschaltgetriebe antreibbar ist. Dies bedeutet, daß, wenn auf der einen Seite Banderolen in die Hohlformen übergeben werden, auf der gegenüberliegenden Seite neue Banderolen an den Drehteller übergeben werden und gleichzeitig in einer zwischen beiden liegenden Zwischenstellung die im Drehteller befindlichen Banderolen exakt ausgerichtet werden. Durch eine derartige schrittgeschaltete Transportbewegung lassen sich jeweils gleichzeitig eine große Anzahl von Banderolen vorformen, ausrichten und in die Hohlformen abgeben, so daß eine mit einer derartigen Vorrichtung ausgerüstete Tiefziehmaschine sich durch eine große Leistung auszeichnet.

Zum Transport der Banderolen besitzt der Drehteller Aufnahmeöffnungen, deren Durchmesser zweckmäßigerweise größer als der von drehbaren und relativ axial verstellbaren Wickeldornen der Aufgabevorrichtung ist. Die Aufnahmeöffnungen des Drehtellers lassen sich durch das Schrittschaltgetriebe exakt mit den Hohlformen des Formwerkzeugs ausrichten, so daß die Aufnahmeöffnungen gewissermaßen den oberen Teil der gesamten Form bilden. Überdies ist der Drehteller zur Aufnahme der Banderolen von der Aufgabevorrichtung relativ axial zur Aufgabevorrichtung verschiebbar. Dies bedeutet gleichzeitig ein Verschieben des Drehtellers zusammen mit dem Unterwerkzeug in Richtung auf die zu verformende thermoplastische Folie bzw. das obere Formwerkzeug.

Eine besonders platzsparende und übersichtliche Bauart des Drehtellers ergibt sich dann, wenn dieser als mehrarmiges Drehkreuz ausgebildet ist und dabei jeweils die Aufnahmeöffnungen im Bereich der Drehkreuzarme angeordnet sind.

Eine Vorrichtung der vorbeschriebenen Art läßt sich auch besonders leicht beschicken, und zwar in der Weise, daß der Aufgabevorrichtung auf gegenüberliegenden Seiten des jeweils mit Banderolen beschickbaren Drehkreuzarmes identisch ausgebildete Beschickungsvorrichtungen mit jeweils einer Längsschneideinrichtung und einer zum Querschneiden erforderlichen Schneideinrichtung zugeordnet ist.

Ein bevorzugtes Ausführungsbeispiel der Erfindung ist in der Zeichnung dargestellt und wird im folgenden näher erläutert. Es zeigen:
- Figur 1: eine Banderoliervorrichtung mit beidseitig angeordneter Beschickungsvorrichtung in einer Vorderansicht,
- Figur 2: die zugehörige Draufsicht und
- Figur 3: eine zugehörige Seitenansicht, teileweise im Längsschnitt entlang der Linie III-III der Fig. 2 und
- Fig. 4: einen schematischen Ablauf der Banderolenübergabe und der Behälterformung.

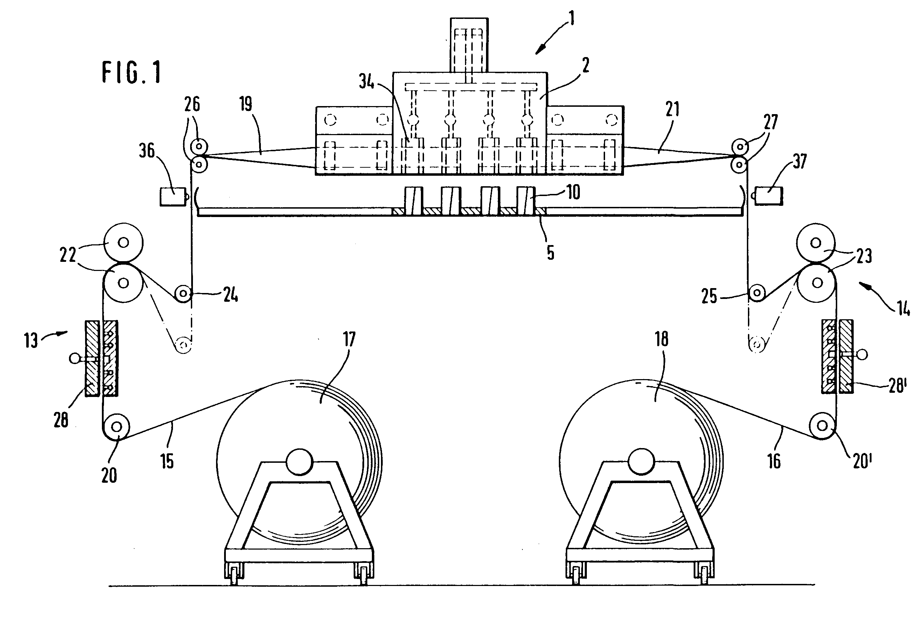

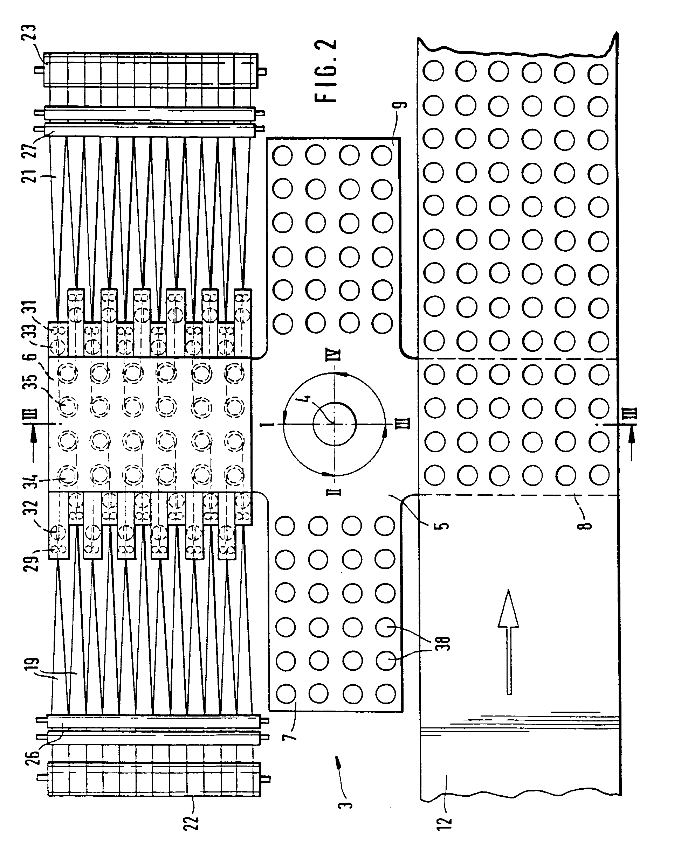

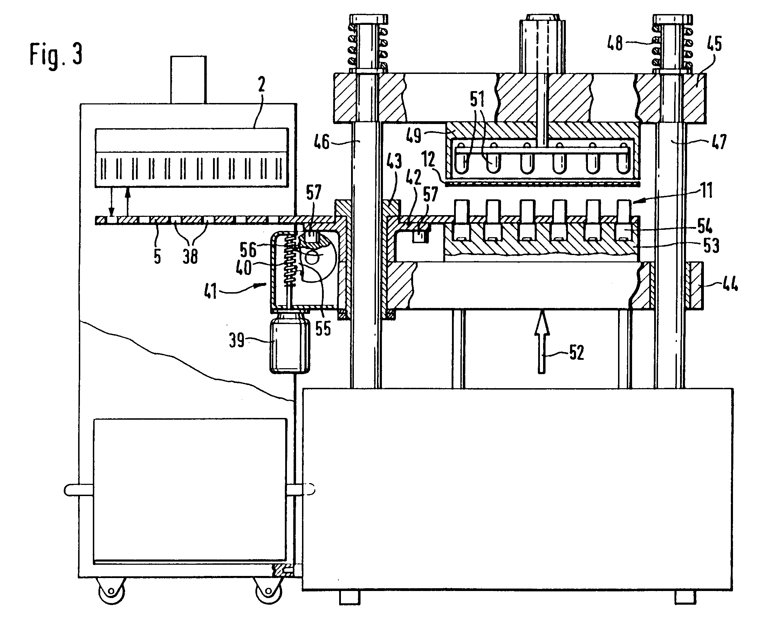

In den Figuren 1 und 2 ist eine einer nicht näher dargestellten Tiefziehmaschine zugeordnete Banderoliervorrichtung 1 mit einer Aufgabevorrichtung 2 bzw. Haltevorrichtung für vorgefertigte Banderolen 10 zugeordnet. Neben der Aufgabevorrichtung 2 ist für die vorgefertigten Banderolen eine Übergabevorrichtung 3 in Gestalt eines um eine im wesentlichen vertikale Achse 4 umlaufenden Drehtellers 5 vorgesehen, der im dargestellten Ausführungsbeispiel vier Drehkreuzarme 6,7,8,9 aufweist. Der im Takt der Tiefziehmaschine geschaltete Drehteller 5 reicht bis in den Bereich einer in Figur 3 dargestellten Formvorrichtung 11, die weiter unten näher erläutert wird. Im Bereich der Formvorrichtung läuft in etwa horizontaler Ebene eine zum Herstellen von Behältern geeignete thermoplastische Folie 12. Wie aus Figur 2 hervorgeht, verläuft diese in bezug auf die Drehachse 4 des Drehtellers 5 gegenüberliegenden Seiten der Aufgabevorrichtung 2.

Wie insbesondere aus Figur 1 hervorgeht, sind auf gegenüberliegenden Seiten der Aufgabevorrichtung 2 Beschickungsvorrichtungen 13,14 vorgesehen, die dazu dienen, jeweils ein Banderolenstreifen 15,16 von Wickelrollen 17,18 über Umlenkrollen 20,20ʹ der Aufgabevorrichtung 2 zuzuführen, und zwar in Form von mehreren nebeneinanderliegenden Längsstreifen 19,21. Zur Herstellung der Längsstreifen sind Schneidwalzen 22,23 vorgesehen, wobei die Längsstreifen über Tänzerwalzen 24,25 und Umlenkrollen 26,27 geführt sind. Für einen schnellen Rollenwechsel sind die Banderolenstreifen noch entlang einer Schneidvorrichtung 28,28ʹ geführt. Hinter den Umlenkrollen 26,27 sind die Längsstreifen 19,21 um 90° verdreht und werden in dieser Weise Antriebswalzen 29,31 und unmittelbar dahinterliegenden Schneidmessern 32,33 zugeführt. Jeweils benachbart zueinanderliegende Antriebswalzen 29,31 bzw. Schneidmesser 32 bzw. 33 sind derart versetzt zueinander angeordnet, daß die auf Länge geschnittenen Banderolen bzw. Etiketten auf jeweils gegenüberliegenden Seiten von Wickeldornen 34,35 tangential zugeführt werden. Auf diese Weise lassen sich auf engstem Raum eine Vielzahl von Banderolen bzw. Etiketten zuführen. Die jeweils genaue Länge der abgeschnittenen Banderolen wird durch Fotozellen 36,37 oder dergleichen Einrichtungen geregelt. Das Aufwickeln der Banderolen auf die Wickeldorne 34,35 erfolgt mittels Vakuum.

Zur Übergabe der Banderolen von der Aufgabevorrichtung 2 an den Drehteller 5 sind in diesem bzw. in dessen Drehkreuzarmen 6,7,8,9 Aufnahmeöffnungen 38 vorgesehen, mittels derer die von den Aufwickeldornen 34,35 abgegebenen Banderolen 10 transportiert werden.

Wie aus Figur 2 ersichtlich, läßt sich der Drehteller 5 in vier verschiedene Raststellungen bewegen. In der Raststellung I werden die Banderolen von der Aufgabevorrichtung 2 and den Drehteller 5 übergeben, während in der um 90° versetzt dazu liegenden Raststellung II die Banderolen innerhalb der Aufnahmeöffnungen 38 des Drehtellers 5 durch eine nicht dargestellte Ausrichtvorrichtung in der Höhe ausgerichtet werden. Schließlich werden die Banderolen in der Raststellung III von dem Drehteller 5 an die Formvorrichtung 11 abgegeben. Die Raststellung IV ist eine Leerstellung und liegt zwischen der Raststellung III und der Raststellung I.
Wie aus Figur 3 hervorgeht, erfolgt der Antrieb des Drehtellers 5 von einem Antriebsmotor 39 unter Zwischenschaltung eines Schneckengetriebes mit Schnecke 40 und Scheckenrad 55 sowie eines Schrittschaltgetriebes 41, mit einer Kurvenscheibe 56 und damit zusammenwirkenden Rollen 57, die an der Unterseite eines zur Aufnahme des Drehtellers 5 dienenden Lagerstücks 42 befestigt sind. Das Lagerstück 42 selbst sitzt auf einer Lagerbüchse 43. Der Drehteller 5 liegt jeweils mit einem Drehkreuzarm zwischen einer unteren Trägerplatte 44 und einer oberen Trägerplatte 45, zwischen denen sich Führungssäulen 46,47 erstrecken. Die gegenüber Druckfedern 48 abgestützte obere Trägerplatte 45 dient zur Abstützung eines oberen, als Niederhalter wirkenden Formwerkzeugs 49 mit mehreren nebeneinanderliegenden Formstempeln 51, während die untere, in Richtung des Pfeils 52 bewegbare Trägerplatte 44 zur Aufnahme eines unteren Formwerkzeugs 53 mit entsprechend den Formstempeln 51 angepaßten Hohlformen 54 dient.

Zum Anbringen unterschiedlicher Banderolen ist der Drehteller zusammen mit dem Formwerkzeug austauschbar ausgebildet.

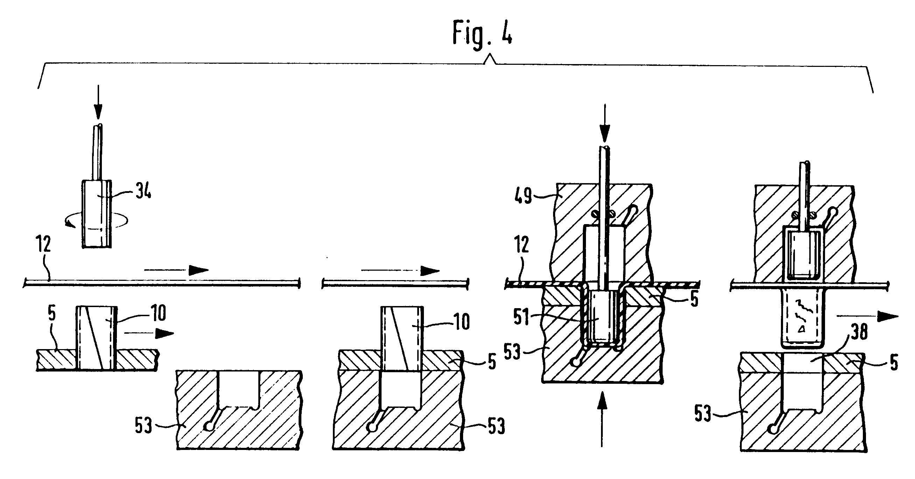

Die erfindungsgemäße Vorrichtung arbeitet wie folgt:
Da die Beschickungsvorrichtungen 13,14 völlig identisch ausgebildet sind, wird bei der Beschreibung der nachfolgenden Arbeitsweise nur Bezug genommen auf die in Figur 1 auf der linken Seite dargestellte Beschickungsvorrichtung 13. Von der Wickelrolle 17 wird der Banderolenstreifen 15 über die Schneidwalzen 22 geführt, wodurch der Banderolenstreifen 15 in mehrere nebeneinanderliegende Längsstreifen 19 geschnitten wird, deren Steuerung über die Tänzerwalze 24 erfolgt. Die Banderolentreifen 19 werden dann - wie dies aus Figur 2 hervorgeht - mit Hilfe der Antriebswalzen 29 den Schneidmessern 32 zugeführt, wo unter Zuhilfenahme der Fotozelle 36 die Banderolenstreifen quergeschnitten werden, so daß Banderolen entsprechender Länge entstehen. Diese Banderolen werden dann - wie dies auch dem in Fig. 4 wiedergegebenen Schemaablauf zu entnehmen ist - den Wickeldornen 34 zugeführt und mit Hilfe von Vakuum auf den Wickeldorn 34 aufgewickelt und somit vorgeformt. Der Drehteller 5 wird dann bis an die Unterseite der Aufgabevorrichtung 2 hochgefahren und danach werden die vorgeformten Banderolen durch Axialverstellung der Wickeldorne 34, deren Durchmesser kleiner als der der Aufnahmeöffnungen 38 des Drehtellers 5 ist, mit Hilfe einer im einzelnen nicht dargestellten Antriebsvorrichtung an die Aufnahmeöffnungen 38 des Drehtellers 5 übergeben. Danach wird der Drehteller 5 aus der Raststellung I in die Raststellung II bewegt, wo die Banderolen durch eine nicht dargestellte Ausrichtvorrichtung in der Höhe ausgerichtet werden. Danach werden die Banderolen in den Bereich der Formvorrichtung gebracht, und zwar derart, daß die Aufnahmeöffnungen 38 des Drehtellers 5 mit den Hohlformen 54 der Formvorrichtung 11 ausgerichtet sind. Dabei bilden die Aufnahmeöffnungen 38 einen Teil, nämlich den oberen Teil des unteren Formwerkzeugs 53. Da in dieser Stellung des Drehtellers auf der gegenüberliegenden Seite, d.h. in der Raststellung I wiederum neue Banderolen aufgenommen werden, wird der Drehteller 5 mithin angehoben, so daß die Banderole mit ihrer Oberkante an der Unterseite der thermoplastischen Folie 12 zu liegen kommt. Gleichzeitig werden die Formstempel 51 über ihren zugehörigen Antrieb nach unten bewegt und durch Einleiten von Preßluft die Behälter geformt. Dabei werden gleichzeitig die Banderolen an der Außenseite der so hergestellten Behälter angesiegelt werden. Danach werden die Formwerkzeuge wieder auseinandergefahren bzw. der Drehteller 5 wird nach unten bewegt und dieser über die Raststellung IV in die Raststellung I bewegt, um dort wieder neue Banderolen aufzunehmen, die inzwischen in der Aufgabevorrichtung 2 vorbereitet worden sind.

## Patentansprüche

1. Tiefziehmaschine zum Herstellen von Behältern aus thermoplastischer Folie mit einer eine Schneideinrichtung aufweisenden Banderoliervorrichtung (1) zum Formen von Banderolen oder Etiketten aus Banderolenstreifen und einer Aufgabevorrichtung (2) zur Aufgabe der Banderolen oder Etiketten an eine Übergabevorrichtung (3), von der die Banderolen oder Etiketten an bewegbare Hohlformen (54) einer Formvorrichtung (11) übergeben werden, **dadurch gekennzeichnet,** daß die Hohlformen (54) relativ senkrecht zur Folienebene beweglich gelagert sind und die Übergabevorrichtung (3) einen zwischen der Banderoliervorrichtung (1) und der dazu mit Abstand angeordneten Formvorrichtung (11) angeordneten, um eine im wesentlichen parallel zur Längsachse der Hohlformen (54) drehbaren Drehteller (5) aufweist.

2. Tiefziehmaschine nach Anspruch 1, **dadurch gekennzeichnet,** daß der Drehteller (5) zur Einnahme von Raststellungen, nämlich einer die Banderolen (10) von einer Aufgabevorrichtung (2) übernehmenden Raststellung I, einer die Banderolen in der Höhe ausrichtenden zweiten Raststellung II, einer die Banderolen an die Hohlformen abgebenden Raststellung III und einer zwischen der Formvorrichtung (11) und der Aufgabevorrichtung (2) liegenden Raststellung IV synchron im Arbeitstakt der Aufgabevorrichtung (2) und der Formvorrichtung (11) durch ein Schrittschaltgetriebe (41) angetrieben ist.

3. Tiefziehmaschine nach Anspruch 1 oder 2, **dadurch gekennzeichnet,** daß der Drehteller (5) zum Transport vorgeformter Banderolen (10) mit Aufnahmeöffnungen (38) versehen ist.

4. Tiefziehmaschine nach einem oder mehreren der Ansprüche 1 bis 3, **dadurch gekennzeichnet,** daß der Drehteller (5) relativ axial zur Aufgabevorrichtung (2) verschiebbar ist.

5. Tiefziehmaschine nach einem oder mehreren der Ansprüche 1 bis 4**, dadurch gekennzeichnet,** daß der Drehteller (5) als mehrarmiges Drehkreuz ausgebildet ist und daß die Aufnahmeöffnungen (38) jeweils im Bereich der Drehkreuzarme (6,7,8,9) angeordnet sind.

6. Tiefziehmaschine nach einem oder mehreren der Ansprüche 1 bis 5, **dadurch gekennzeichnet,** daß der Aufgabevorrichtung (2) auf gegenüberliegenden Seiten des jeweils mit Banderolen (10) beschickbaren Drehkreuzarmes identisch ausgebildete Beschickungsvorrichtungen (13,14) mit jeweils einer Längsschneideinrichtung (22,23) und einer zum Ablängen der Banderolen dienenden Schneideinrichtung (29,32 bzw. 31,33) zugeordnet ist.

7. Tiefziehmaschinen nach einem oder mehreren der Ansprüche 1 bis 6, **dadurch gekennzeichnet**, daß jeweils die von einer um eine horizontale Achse drehbar gelagerten Wickelrolle (17,18) ablaufende Banderolenstreifen (15,16) über Umlenkrollen (20,21) geführt ist und daß in Bewegungsrichtung gesehen hinter der Längsschneideinrichtung (22, 23) die austretenden Längsstreifen (19,21) um weitere Umlenkrollen (26,27) in eine vertikale Ebene umgelenkt und in dieser Weise der Aufgabevorrichtung (2) zuführbar sind.

8. Tiefziehmaschine nach einem oder mehreren der Ansprüche 1 bis 7, **dadurch gekennzeichnet**, daß die Aufgabevorrichtung (2) drehbare und relativ axial verstellbare Wickeldorne (34, 35) aufweist.

9. Tiefziehmaschine nach einem oder mehreren der Ansprüche 1 bis 8, **dadurch gekennzeichnet**, daß jeweils benachbart zueinanderliegende Antriebswalzen (29,31) und Schneidmesser (32,33) der Schneideinrichtung derart versetzt zueinander angeordnet sind, daß die auf Länge geschnittenen Banderolen, Etiketten oder dergleichen auf der jeweils gegenüberliegenden Seite der Wickeldorne (34,35) tangential zuführbar sind.

## Claims

1. Thermoforming machine for producing containers from thermoplastics sheet, having a banderoling device (1), which has a cutting device, for forming banderoles or labels from banderole strips and a feed device (2) for feeding the banderoles or labels to a transfer device (3), from which the banderoles or labels are transferred to movable hollow moulds (54) of a moulding device (11), characterised in that the hollow moulds (54) are mounted so as to be movable relatively vertically to the plane of the sheet and the transfer device (3) has a rotary table (5) which is disposed between the banderoling device (1) and the moulding device (11) disposed at a distance therefrom and is rotatable about a [lacuna] which is substantially parallel to the longitudinal axis of the hollow moulds (54).

2. Thermoforming machine according to Claim 1, characterised in that the rotary table (5) is driven synchronously in the operating cycle of the feed device (2) and the moulding device (11) by a step-by-step gearing (41) so as to assume locking positions, specifically a locking position I receiving the banderoles (10) from a feed device (2), a second locking position II aligning the banderoles vertically, a locking position III transferring the banderoles to the hollow moulds and a locking position IV lying between the moulding device (11) and the feed device (2).

3. Thermoforming machine according to Claim 1 or 2, characterised in that the rotary table (5) is provided with receptacle openings (38) for the transport of pre-formed banderoles (10).

4. Thermoforming machine according to one or more of Claims 1 to 3, characterised in that the rotary table (5) is displaceable relatively axially to the feed device (2).

5. Thermoforming machine according to one or more of Claims 1 to 4, characterised in that the rotary table (5) is designed as a multi-armed star wheel and in that the receptacle openings (38) are in each case disposed in the region of the star-wheel arms (6,7,8,9).

6. Thermoforming machine according to one or more of Claims 1 to 5, characterised in that identically designed charging devices (13,14) having in each case a longitudinal cutting device (22,23) and a cutting device (29,32 and 31,33) serving to cut the banderoles to length are allocated to the feed device (2) on opposite sides of the star-wheel arm which can be charged with banderoles (10) in each case.

7. Thermoforming machine according to one or more of Claims 1 to 6, characterised in that in each case the banderole strips (15,16) unrolling from a winding roll (17,18), which is mounted so as to be rotatable about a horizontal axis, is [sic] guided via guide rolls (20,21) and in that, seen in the direction of movement behind the longitudinal cutting device (22,23), the emerging longitudinal strips (19,21) are deflected around further guide rolls (26,27) into a vertical plane and in this manner can be transported to the feed device (2).

8. Thermoforming machine according to one or more of Claims 1 to 7, characterised in that the feed device (2) has winding mandrels (34, 35) which are rotatable and relatively axially adjustable.

9. Thermoforming machine according to one or more of Claims 1 to 8, characterised in that drive rolls (29,31) and cutting knives (32,33) of the cutting device, which in each case are disposed adjacent to one another, are disposed staggered with respect to one another in such a manner that the cut-to-length banderoles, labels or the like can be transported in a tangential manner on the respective opposite side of the winding mandrels (34,35).

## Revendications

1. Machine d'emboutissage pour fabriquer des récipients à partir d'une feuille thermoplastique avec un dispositif (1) de formation de bandelettes comportant un dispositif de coupe pour façonner des bandelettes ou des étiquettes à partir de rubans de bandelettes et avec un dispositif de distribution (2) pour délivrer les bandelettes ou étiquettes à un dispositif de transfert (3), à partir duquel les bandelettes ou étiquettes sont transférées dans des matrices creuses (54) d'un dispositif de formage (11), caractérisée en ce que les matrices creuses (54) sont mobiles perpendiculairement par rapport au plan de la feuille et en ce que le dispositif de transfert (3) présente un plateau tournant (5) disposé entre le dispositif de formation des bandelettes (1) et le dispositif de formage (11) disposé à distance de celui-ci et tournant autour d'un axe substantiellement parallèle à l'axe longitudinal des matrices creuses (54).

2. Machine d'emboutissage suivant la revendication 1, caractérisée en ce que le plateau tournant (5) peut être entraîné par un moteur pas à pas (41) en synchronisme avec la cadence de travail du dispositif de distribution (2) et du dispositif de formage (11), pour prendre des positions d'encliquetage, à savoir une position d'encliquetage I pour recevoir les bandelettes (10) d'un dispositif de distribution (2), une deuxième position d'encliquetage II pour aligner les bandelettes en hauteur, une position d'encliquetage III pour transférer les bandelettes dans les matrices creuses et une position d'encliquetage IV située entre le dispositif de formage (11) et le dispositif de distribution (2).

3. Machine d'emboutissage suivant la revendication 1 ou 2, caractérisée en ce que le plateau tournant (5) est pourvu d'ouvertures réceptrices (38) pour le transport de bandelettes (10) préformées.

4. Machine d'emboutissage suivant une ou plusieurs des revendications 1 à 3, caractérisée en ce que le plateau tournant (5) est mobile axialement par rapport au dispositif de distribution (2).

5. Machine d'emboutissage suivant une ou plusieurs des revendications 1 à 4, caractérisée en ce que le plateau tournant (5) est réalisé sous la forme d'une croix tournante à plusieurs bras et en ce que les ouvertures réceptrices (38) sont respectivement disposées dans la région des bras (6, 7, 8, 9) de la croix tournante.

6. Machine d'emboutissage suivant une ou plusieurs des revendications 1 à 5, caractérisée en ce qu'au dispositif de distribution (2) sont associés, sur les côtés opposés de chaque bras de la croix tournante à alimenter par des bandelettes (10), des dispositifs d'alimentation (13, 14) de conception identique avec chacun un dispositif de refendage (22, 23) et un dispositif de coupe (29, 32 respectivement 31, 33) servant à la mise à longueur des bandelettes.

7. Machine d'emboutissage suivant une ou plusieurs des revendications 1 à 6, caractérisée en ce que chacun des rubans de bandelettes (15, 16) déroulé d'une bobine (17, 18) tournant autour d'un axe horizontal est conduit sur des rouleaux de renvoi (20, 21) et en ce que, vu dans la direction du mouvement, les bandes refendues (19, 21) sont, après le dispositif de refendage (22, 23), déviées dans un plan vertical par d'autres rouleaux de renvoi (26, 27) et peuvent être amenées dans cette position au dispositif de distribution (2).

8. Machine d'emboutissage suivant une ou plusieurs des revendications 1 à 7, caractérisée en ce que le dispositif de distribution (2) présente des mandrins d'enroulement (34, 35) rotatifs et réglables axialement l'un par rapport à l'autre.

9. Machine d'emboutissage suivant une ou plusieurs des revendications 1 à 8, caractérisée en ce que les rouleaux d'entraînement (29, 31) et les couteaux de coupe (32, 33) situés au voisinage l'un de l'autre sont décalés l'un par rapport à l'autre de telle façon que les bandelettes respectivement les étiquettes ou analogues coupées à longueur peuvent être conduites tangentiellement sur des côtés opposés des mandrins d'enroulement (34, 35).
